(19) Europäisches Patentamt / European Patent Office / Office européen des brevets

(11) **EP 3 159 363 B1**

(12) **EUROPEAN PATENT SPECIFICATION**

(45) Date of publication and mention of the grant of the patent:
**24.07.2019 Bulletin 2019/30**

(51) Int Cl.:
***C08F 20/14*** *(2006.01)*  ***C08F 2/02*** *(2006.01)*
***C08L 33/12*** *(2006.01)*

(21) Application number: **15811110.4**

(22) Date of filing: **22.06.2015**

(86) International application number:
**PCT/JP2015/067919**

(87) International publication number:
**WO 2015/199038 (30.12.2015 Gazette 2015/52)**

(54) **METHACRYLIC RESIN COMPOSITION AND MOLDED ARTICLE OF SAME**

METHACRYLISCHE HARZZUSAMMENSETZUNG UND FORMARTIKEL DARAUS

COMPOSITION DE RÉSINE MÉTHACRYLIQUE ET ARTICLE MOULÉ À BASE DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2014 JP 2014128489**

(43) Date of publication of application:
**26.04.2017 Bulletin 2017/17**

(73) Proprietor: **Sumitomo Chemical Co., Ltd Chuo-ku, Tokyo 104-8260 (JP)**

(72) Inventors:
• **YAMAMORI, Akihiro Tokyo 104-8260 (JP)**
• **KADOYA, Hidenori Niihama-shi Ehime 792-8521 (JP)**
• **YAMAZAKI, Kazuhiro Niihama-shi Ehime 792-8521 (JP)**

(74) Representative: **J A Kemp 14 South Square Gray's Inn London WC1R 5JJ (GB)**

(56) References cited:
**WO-A1-2014/088082    JP-A- 2011 168 683 JP-A- 2013 189 652**

Remarks:
The file contains technical information submitted after the application was filed and not included in this specification

**Description**

Technical Field

The present invention relates to a methacrylic resin composition and a molded article of the same.

Background Art

A methacrylic resin composition is excellent in the transparency and the weather resistance and is therefore used as a molding material of members used for vehicles, especially for automobiles, such as a tail lamp cover, a head lamp cover, and a cover of an indicator panel (hereinafter, referred to as "vehicle member(s)").

For vehicle members, a molded article having a thin wall has recently been demanded to improve the fuel economy. An increase in size is also demanded to the vehicle members. As to a tail lamp cover and a head lamp cover, a new idea can be applied to disposition of their light source units and a broader choice of design is offered by increasing the size of each of these vehicle members, and the lighting units each having an increased size can further improve the forward and rearward visibilities by increasing the number of the light sources to cause each of the lighting units to illuminate as a whole.

A wax remover may be used for the vehicle members and a lamp cover unit and the like of each of some vehicles may be painted. These vehicle members are often exposed to an organic solvent or the like, and a property of generating no crazing and no crack against such solvents (hereinafter, this performance will be referred to as "solvent resistance") is also demanded thereto.

For the mold processing of the methacrylic resin composition, excellent fluidity of the composition is required during the processing. When the molded article such as the vehicle member is taken out, high heat resistance of the composition is also required to avoid any deformation of the vehicle member. In the case where the vehicle member after being molded is bonded to another resin member during the assembling process of a tail lamp, a property of generating no resin string when these members are fusion-bonded to heat plates (hereinafter, this performance will be referred to as "stringing resistance") is also required.

As to the fluidity, in the case where a thin-walled molded article having an increased size is molded that recently has especially been demanded, the viscosity of the resin composition needs to be decreased when the resin composition is melted due to insufficient fluidity of the resin, and the processing may need to be conducted at an increased molding temperature compared to the conditions for the conventional processing. It is however well known that, when the molding temperature is increased, especially polymethylmethacrylate (PMMA) among methacrylic resins starts its pyrolysis from unsaturated terminals of the polymeric molecules in the resin at 260°C or higher. When the molding temperature is high as this, the methacrylic resin thermally decomposes to be monomers, and the monomers evaporate, so that this causes a problem of generating degradation in appearance called "silver". In this case, the temperature employed during the mold processing can be reduced by reducing the molecular weight or enhancing the fluidity of the resin by copolymerizing therewith a comonomer that improves the fluidity. The resin can thereby be molded without any generation of the degradation such as the silver. In this case, advantages are also acquired that the molding can also be conducted using less electric power, that the cycle of heating and cooling can be shortened, and that the production efficiency can be improved.

With the conventional method, however, the performance is sacrificed such as solvent resistance, heat resistance, mechanical strength such as tensile strength, stringing resistance, and appearance.

To solve the problem, Patent Literatures 1 and 2 each reported use of a methacrylic resin composition that includes a methacrylic resin having a high molecular weight and a methacrylic resin having a low molecular weight.

Citation List

Patent Literature

   Patent Literature 1: JP 2012-12564 A
   Patent Literature 2: JP 2006-193647 A

WO 2014/088082 discloses a method for producing a methacrylic polymer composition, which comprises a first polymerization step and a second polymerization step.

## Summary of Invention

### Technical Problem

With the conventional technique, however, no composition has been found so far that is good in fluidity and that is also good in all physical properties including thermal stability, solvent resistance, heat resistance, mechanical strength such as tensile strength, and stringing resistance.

In Patent Literature 1, the fluidity, the stringing resistance, and the heat resistance are investigated while no composition is found that has mechanical strength such as high tensile strength, and high heat stability and that exhibits its maximal fluidity.

In Patent Literature 2, the solvent resistance, the heat resistance, and the fluidity are investigated while no composition is found that has high thermal stability and high stringing resistance and that exhibits its maximal fluidity.

As above, the demand for the fluidity is significant and the advantages for molding are more clearly acquired as the fluidity is enhanced while, on the other hand, a methacrylic resin component is demanded that tends to avoid any pyrolysis thereof even at a high temperature.

An object of the present invention is to provide a methacrylic resin composition that maintains all physical properties including good solvent resistance, good heat resistance, good mechanical strength, and good stringing resistance, that has especially good fluidity, and that is also good in thermal stability.

### Solution to Problem

The inventors actively studied to solve the problems and, as a result, have completed the present invention.

The present invention provides, but is not limited to, the following aspects.

[1] A methacrylic resin composition that comprises two types of methacrylic resins differing in peak molecular weight from each other, wherein the methacrylic resin composition satisfies the following conditions (I), (II), (III) and (IV):

(I) the methacrylic resins each have a methyl methacrylate unit and an acrylic acid ester unit as monomer units, and the weight ratio of methyl methacrylate units in the methacrylic resin composition is higher than 98.5% by weight relative to 100% by weight of all monomer units, as determined by pyrolysis gas chromatography and the weight ratio of acrylic acid ester units in the methacrylic resin composition is from 0.3 to 0.7% by weight relative to 100% by weight of all monomer units, as determined by pyrolysis gas chromatography;

(II) when the higher peak molecular weight of the peak molecular weights of the methacrylic resins as determined from the methacrylic resin composition by SEC chromatography according to JIS K 7252 is denoted as "HP", the value of HP satisfies the formula: $180,000 < HP < 220,000$;

(III) when the lower peak molecular weight of the peak molecular weights of the methacrylic resins as determined from the methacrylic resin composition by SEC chromatography according to JIS K 7252 is denoted as "LP", the value of LP satisfies the formula: $24,000 \leq LP \leq 35,000$; and

(IV) when the value representing the height of a peak at HP is denoted as "a" and the value representing a height of a peak at LP is denoted as "b" on a differential molecular weight distribution curve, a value of PR defined by a/b satisfies the formula: $1.32 \leq PR \leq 1.60$.

[2] The methacrylic resin composition according to [1], wherein the methacrylic resin composition is produced by continuous bulk polymerization.

[3] The methacrylic resin composition according to [1] or [2], wherein the methacrylic resin composition is produced by continuous bulk polymerization using two complete mixing tanks.

[4] The methacrylic resin composition according to any one of [1] to [3], wherein the methacrylic resin composition comprises a methacrylic resin obtained by polymerization at a polymerization temperature of 110°C to 160°C at a weight ratio equal to or higher than 50% by weight relative to the total weight of the methacrylic resin composition.

[5] The use of the methacrylic resin composition according to any one of [1] to [4] in injection molding.

[6] The use of the methacrylic resin composition according to any one of [1] to [4] in a vehicle application.

[7] A molded article obtainable from the methacrylic resin composition according to any one of [1] to [4] or from the use according to [5] or [6].

### Advantageous Effects of Invention

According to the present invention, a methacrylic resin composition can be provided that maintains all physical properties including good solvent resistance, good heat resistance, good mechanical strength, and good stringing resistance, that has especially good fluidity, and that is also good in thermal stability.

Brief Description of Drawings

Fig. 1 shows a specimen (before cutting) to be used in an evaluation test for stringing resistance.
Fig. 2 shows the specimen (after cutting) to be used in an evaluation test for stringing resistance.
Fig. 3 is a schematic view showing an evaluation test (before starting the test) for stringing resistance.
Fig. 4 is a schematic view showing an evaluation test (during the test) for stringing resistance.
Fig. 5 is a schematic view of an example of an apparatus for producing a methacrylic resin composition of the present invention.
Fig. 6 is a graph of the abundance ratio (on the ordinate) and the molecular weight (on the abscissa) of the methacrylic resins included in a methacrylic resin composition produced in Example 1.
Fig. 7 is a graph of a differential molecular weight distribution curve of the methacrylic resins contained in the methacrylic resin composition produced in Example 1.

Description of Embodiments

The methacrylic resin composition of the present invention includes two methacrylic resins differing in peak molecular weight from each other, and is characterized in that the methacrylic resin composition satisfies the following conditions (I), (II), (III), and (IV).

(I) The methacrylic resins each have a methyl methacrylate unit as a monomer unit, and the weight ratio of the methyl methacrylate unit is higher than 98.5% by weight relative to 100% by weight of all the monomer units.
(II) When the higher peak molecular weight of the peak molecular weights of the methacrylic resins is denoted as "HP", the value of HP satisfies the formula: $180,000 \leq HP \leq 220,000$.
(III) When the lower peak molecular weight of the peak molecular weights of the methacrylic resins is denoted as "LP", the value of LP satisfies the formula: $24,000 \leq LP \leq 35,000$.
(IV) When the value representing the height of the peak at HP is denoted as "a" and the value representing the height of the peak at LP is denoted as "b" on a differential molecular weight distribution curve, the value of PR represented by a/b satisfies the formula: $1.32 \leq PR \leq 1.60$.

The methacrylic resin composition of the present invention maintains all physical properties including solvent resistance, heat resistance, mechanical strength, and stringing resistance each at a desired level that are described below in detail (especially, in Examples), has especially good fluidity, and is also good in thermal stability, by satisfying all the conditions (I), (II), (III), and (IV).
The conditions (I), (II), (III), and (IV) will each be described in more detail in the following description of the methacrylic resin composition.

(Methacrylic Resin Composition)

The methacrylic resin composition of the present invention (hereinafter, may simply be described as "the present resin composition") comprises at least a methacrylic resin, and the methacrylic resin contained in the methacrylic resin composition comprises at least two methacrylic resins differing in peak molecular weight from each other.
The present resin composition comprises at least
a methacrylic resin having a higher peak molecular weight (hereinafter, may simply be described as "HP"), preferably the highest peak molecular weight, (hereinafter, may simply be described as "HP resin"), and
a methacrylic resin having a lower peak molecular weight, that is, a peak molecular weight lower than HP (hereinafter, may simply be described as "LP"), preferably the second highest peak molecular weight to HP (hereinafter, may simply be described as "LP resin").
In the present invention, the "peak molecular weight" of the methacrylic resin means a peak (a locally maximal) molecular weight of a molecular weight distribution curve that can be determined using conventionally known size exclusion chromatography (SEC) (for example, gel permeation chromatography (GPC)) according to JIS K 7252-1 to -4 (Plastic-Determination Methods of Average Molecular Weight and Molecular Weight Distribution of Polymeric Molecules Using Size Exclusion Chromatography-Part 1 to Part 4) that will be described below in detail.
Both of the methacrylic resins contained in the present resin composition each comprise, for example, a methyl methacrylate unit (that is, a monomer unit capable of being derived from methyl methacrylate when methyl methacrylate is used as a monomer) as a monomer unit (that is, a monomer unit capable of being derived from a monomer forming the methacrylic resin).

The methacrylic resin may further comprise another monomer unit and comprises an acrylic acid ester unit (that is, a monomer unit capable of being derived from an acrylic acid ester when the acrylic acid ester is used as a monomer).

Examples of the acrylic acid ester from which an acrylic acid ester unit can be derived include methyl acrylate, ethyl acrylate, propyl acrylate, n-butyl acrylate, sec-butyl acrylate, tert-butyl acrylate, cyclohexyl acrylate, benzyl acrylate, 2-ethylhexyl acrylate, 2-hydroxyethyl acrylate, and cyclopentadiene acrylate. Among these, methyl acrylate and ethyl acrylate are especially preferable, and these may be used individually, or two or more of these may be used in combination.

As to the condition (I), the weight ratio of the methyl methacrylate unit in each of the methacrylic resins included in the present resin composition is, for example, higher than 98.5% by weight, is, preferably, 99.0 to 99.9% by weight, and is, more preferably, 99.0 to 99.5% by weight relative to 100% by weight of all the monomer units. The weight ratio can be determined by an analysis conducted using pyrolysis gas chromatography or the like.

When the weight ratio of the methyl methacrylate unit is higher than 98.5% by weight, there can be acquired such effects as good transparency, good heat resistance, and good mechanical strength.

In the present resin composition, the weight ratio of the acrylic acid ester unit which may be contained in the methacrylic resin is 0.3 to 0.7% by weight. The weight ratio can be determined by an analysis conducted using pyrolysis gas chromatography or the like.

An excessively low weight ratio of the acrylic acid ester unit is disadvantageous because depolymerization of the obtained copolymer tends to progress and the thermal stability during injection molding tends to be degraded. Exceeding 1.5% by weight of the weight ratio of the acrylic acid ester unit is disadvantageous because the heat resistance of the obtained molded article such as a vehicle member may be degraded, though the molding processability is improved.

A conventionally known analysis method can be employed as the analysis using the pyrolysis gas chromatography or the like.

For example, the methacrylic resin composition of the present invention is thermally decomposed in a pyrolytic furnace at a prescribed temperature (equal to or higher than 400°C), the generated decomposition gas is analyzed using gas chromatography, the area ratios of peaks corresponding to the constituent monomer components are determined for the methacrylic resin, and the weight ratios (%) are determined by converting the area ratios into weight ratios (%).

As the method of converting the area ratios into the weight ratios (%), for example, with respect to a standard reference of the methacrylic resin (that is available as a commercial item in the market and whose types and the weight ratios of its monomer components are known), the area ratios of the peaks corresponding to the monomer components are determined in advance similarly to the above, factors are thereby calculated with which the area ratios can be converted into the weight ratios (%) of the monomer components, or such factors are calculated by producing a calibration curve using plural standard references when necessary, and the area ratios of the monomer components of the methacrylic resin(s) contained in the methacrylic resin composition of the present invention can thereby be converted into the corresponding weight ratios (%) using the factors. When the peaks partially overlap with each other, the ratios can also be calculated by correcting the area of the overlapping portion using a conventionally known method.

In addition to methyl methacrylate and an acrylic acid ester, other monomers each capable of copolymerizing with methyl methacrylate and/or the acrylic acid ester may be contained as the monomer components. Examples of such other monomers include a monofunctional monomer having one radically-polymerizable double bond and a multifunctional monomer having two or more radically-polymerizable double bonds, and these may be used individually, or two or more of these may be used in combination.

Examples of the monofunctional monomer include methacrylic acid esters such as ethyl methacrylate, propyl methacrylate, n-butyl methacrylate, sec-butyl methacrylate, tert-butyl methacrylate, 2-ethylhexyl methacrylate, cyclohexyl methacrylate, benzyl methacrylate, and cyclopentadiene methacrylate; unsaturated carboxylic acids or acid anhydrides thereof such as acrylic acid, methacrylic acid, maleic acid, itaconic acid, maleic anhydride, and itaconic anhydride; nitrogen-containing monomers such as acrylamide, methacrylamide, acrylonitrile, and methacrylonitrile; and styrene-based monomers such as styrene and α-methylstyrene.

Examples of the multifunctional monomer include unsaturated carboxylic acid diesters of glycols such as ethylene glycol dimethacrylate and butanediol dimethacrylate; alkenyl esters of unsaturated carboxylic acids such as allyl acrylate, allyl methacrylate, and allyl cinnamate; alkenyl esters of polybasic acids such as diallyl phthalate, diallyl maleate, triallyl cyanurate, and triallyl isocyanurate; unsaturated carboxylic acid esters of polyhydric alcohols such as trimethylolpropane triacrylate; and divinylbenzene.

Various conventionally known polymerization methods such as, for example, a suspension polymerization method, a solution polymerization method, and a bulk polymerization method can each be employed as the polymerization method for the monomer components and, especially, the bulk polymerization method is preferably employed.

When the suspension polymerization is used, for example, even when the resin is washed after the polymerization, a polymerization stabilizer and the like may be contained in the resin and the appearance may not be excellent.

In contrast, the bulk polymerization uses no polymerization stabilizer and provides an excellent appearance. Unlike the suspension polymerization, the polymerization temperature is higher than 100°C and, as a result, the syndiotacticity of the resin tends to be lowered. The syndiotacticity may in general influence the fluidity and the heat resistance of the resin, and the fluidity is enhanced and the heat resistance is degraded as the syndiotacticity is lowered. Thus, higher fluidity can be achieved with the equal molecular weight by employing the bulk polymerization. In addition, the methacrylic resin composition can be obtained with high productivity using continuous bulk polymerization because the bulk polymerization can be conducted by, for example, continuously supplying the monomer components and optionally a polymerization initiator, a chain transfer agent, and the like into a reaction container and detaining these in the reaction container for a prescribed time period, and continuously taking thus obtained partial polymer out.

In the production of the methacrylic resin composition of the present invention, the polymerization temperature is, preferably, 110 to 160°C and is, more preferably, 120 to 140°C. The thermal stability is degraded when the polymerization temperature is too high or too low. From the viewpoint of improving the thermal stability of the methacrylic resin component which is produced in the present invention, the weight ratio of the methacrylic resin(s) obtained by the polymerization at the polymerization temperature of 110°C to 160°C in the methacrylic resin composition of the present invention is preferably, equal to or higher than 50% by weight and is, more preferably, 70% by weight to 100% by weight relative to the total weight of the methacrylic resin composition.

In the case where the production of the methacrylic resin composition of the present invention is conducted using a continuous polymerization using two reaction tanks, when the temperature of the syrup obtained in the first reaction tank is brought into the second reaction tank without being cooled, polymerization heat generation occurs during the polymerization in the second reaction tank and, due to this, the temperature of the syrup in the second reaction tank may be higher than the temperature of the syrup in the first reaction tank. In this case, the temperature in the second reaction tank is advantageously set to be equal to or lower than 190°C in order to suppress production of any by-product such as a dimer.

In each of the methods for the production of the methacrylic resin, especially, the bulk polymerization, for example, a polymerization initiator and a chain transfer agent may be used. For example, a radical initiator can be used as the polymerization initiator.

Examples of the radical initiator include azo compounds such as azobisisobutyronitrile, azobisdimethylvaleronitrile, azobiscyclohexanenitrile, 1,1'-azobis(1-acetoxy-1-phenylethane), dimethyl 2,2'-azobis isobutyrate, and 4,4'-azobis-4-cyanovaleric acid; and organic peroxides such as benzoyl peroxide, lauroyl peroxide, acetyl peroxide, caprylyl peroxide, 2,4-dichlorobenzoyl peroxide, isobutyl peroxide, acetylcyclohexylsulfonyl peroxide, t-butyl peroxypivalate, t-butyl peroxyneodecanoate, t-butyl peroxyneoheptanoate, t-butyl peroxy-2-ethylhexanoate, 1,1-di(t-butylperoxy)cyclohexane, 1,1-di(t-butylperoxy)-3,3,5-trimethylcyclohexane, 1,1-di(t-hexylperoxy)-3,3,5-trimethylcyclohexane, diisopropyl peroxydicarbonate, diisobutyl peroxydicarbonate, di-sec-butyl peroxydicarbonate, di-n-butyl peroxydicarbonate, bis(2-ethylhexyl)peroxydicarbonate, bis(4-t-butylcyclohexyl)peroxydicarbonate, t-amyl peroxy-2-ethylhexanoate, 1,1,3,3-tetramethylbutyl peroxy-ethylhexanoate, 1,1,2-trimethylpropyl peroxy-2-ethylhexanoate, t-butyl peroxyisopropylmonocarbonate, t-amyl peroxyisopropylmonocarbonate, t-butyl peroxy-2-ethylhexylcarbonate, t-butyl peroxyallylcarbonate, t-butyl peroxyisopropylcarbonate, 1,1,3,3-tetramethylbutyl peroxyisopropylmonocarbonate, 1,1,2-trimethylpropyl peroxyisopropylmonocarbonate, 1,1,3,3-tetramethylbutyl peroxyisononanate, 1,1,2-trimethylpropyl peroxy-isononanate, and t-butyl peroxybenzoate.

These polymerization initiators may be used individually, or two or more thereof may be used in combination.

The type(s) of polymerization initiator may be selected corresponding to the types of methacrylic resin to be produced and the raw material monomers to be used. Though not especially limited in the present invention, the radical initiator having a half-life period of, for example, equal to or shorter than 1 minute at the polymerization temperature is preferred.

The use amount of the polymerization initiator may be adjusted corresponding to the target polymerization rate, the reaction conditions, and the like.

The chain transfer agent usable in the present invention may be either a monofunctional or a multifunctional chain transfer agent. Examples of the chain transfer agent include alkyl mercaptans such as n-propyl mercaptan, isopropyl mercaptan, n-butyl mercaptan, t-butyl mercaptan, n-hexyl mercaptan, n-octyl mercaptan, 2-ethylhexyl mercaptan, n-dodecyl mercaptan, and t-dodecyl mercaptan; aromatic mercaptans such as phenyl mercaptan and thiocresol; mercaptans each having 18 or less carbon atoms such as ethylene thioglycol; polyhydric alcohols such as ethylene glycol, neopentyl glycol, trimethylolpropane, pentaerythritol, dipentaerythritol, tripentaerythritol, and sorbitol; and those whose hydroxy groups are each esterified by thioglycolic acid or 3-mercaptopropionic acid, 1,4-dihydronaphthalene, 1,4,5,8-tetrahydronaphthalene, β-terpinene, terpinolene, 1,4-cyclohexadiene, and hydrogen sulfide. These chain transfer agents may each be used individually, or two or more thereof may be used in combination.

The type(s) and the use amount(s) of the chain transfer agent(s) may be selected corresponding to the types of the methacrylic resin to be produced and the raw material monomers to be used. Though not especially limited in the present invention, for example, n-octylmercaptan or n-dodecylmercaptan is preferred as the chain transfer agent.

In addition to the above raw material monomers, the polymerization initiator, the chain transfer agent, and the like, any other appropriate components may be used, for example, a mold release agent, a rubber-like polymer such as butadiene or styrenebutadiene rubber (SBR), a thermal stabilizer, and a UV (ultraviolet) absorbing agent.

The mold release agent is an agent that is used to improve the moldability of the obtained methacrylic resin composition. The thermal stabilizer is an agent that is used to suppress any pyrolysis of the methacrylic resin to be produced. The UV absorbing agent is an agent that is used to suppress any degradation of the methacrylic resin to be produced due to UV rays.

The mold release agent is not especially limited while examples thereof include higher fatty acid esters, higher fatty alcohols, higher fatty acids, higher fatty acid amides, and higher fatty acid metallic salts. These mold release agents may each be used individually, or two or more thereof may be used in combination.

Examples of the higher fatty acid ester include saturated fatty acid alkyl esters such as methyl laurate, ethyl laurate, propyl laurate, butyl laurate, octyl laurate, methyl palmitate, ethyl palmitate, propyl palmitate, butyl palmitate, octyl palmitate, methyl stearate, ethyl stearate, propyl stearate, butyl stearate, octyl stearate, stearyl stearate, myristyl myristate, methyl behenate, ethyl behenate, propyl behenate, butyl behenate, and octyl behenate; unsaturated fatty acid alkyl esters such as methyl oleate, ethyl oleate, propyl oleate, butyl oleate, octyl oleate, methyl linoleate, ethyl linoleate, propyl linoleate, butyl linoleate, and octyl linoleate; saturated fatty acid glycerides such as monoglyceride laurate, diglyceride laurate, triglyceride laurate, monoglyceride palmitate, diglyceride palmitate, triglyceride palmitate, monoglyceride stearate, diglyceride stearate, triglyceride stearate, monoglyceride behenate, diglyceride behenate, and triglyceride behenate; and unsaturated fatty acid glycerides such as monoglyceride oleate, diglyceride oleate, triglyceride oleate, monoglyceride linoleate, diglyceride linoleate, and triglyceride linoleate. Among these, methyl stearate, ethyl stearate, butyl stearate, octyl stearate, monoglyceride stearate, diglyceride stearate, triglyceride stearate, and the like are preferred.

Examples of the higher fatty alcohol include, more specifically, saturated fatty alcohols such as lauryl alcohol, palmityl alcohol, stearyl alcohol, isostearyl alcohol, behenyl alcohol, myristyl alcohol, and cetyl alcohol; and unsaturated fatty alcohols such as oleyl alcohol and linoleyl alcohol. Among these, stearyl alcohol is preferred.

Examples of the higher fatty acid include, more specifically, saturated fatty acids such as caproic acid, caprylic acid, capric acid, lauric acid, myristic acid, palmitic acid, stearic acid, arachidic acid, behenic acid, lignoceric acid, and 12-hydroxyoctadecanoic acid; and unsaturated fatty acids such as palmitoleic acid, oleinc acid, linoleic acid, linolenic acid, cetoleic acid, erucic acid, and recinoleic acid.

Examples of the higher fatty acid amide include, more specifically, saturated fatty acid amides such as lauric amide, palmitic amide, stearic amide, and behenic amide; unsaturated fatty acid amides such as oleic amide, linoleic amide, and erucamide; and amides such as lauric amide ethylenebis, palmitic amide ethylenebis, stearic amide ethylenebis, and N-oleylstearoamide. Among these, stearic amide and stearic amide ethylenebis are preferred.

Examples of the higher fatty acid metallic salt include, sodium salts, potassium salts, calcium salts, and barium salts of the above higher fatty acids.

The use amount of the mold release agent is adjusted to be, preferably, 0.01 to 1.0 part by weight and is adjusted to be, more preferably, 0.01 to 0.50 parts by weight relative to 100 parts by weight of the methacrylic resin(s) included in the obtained methacrylic resin composition.

The thermal stabilizer is not especially limited while examples thereof include hindered phenol-based and phosphorus-based stabilizers and organic disulfide compounds. Among these, organic disulfide compounds are preferred. The thermal stabilizers may each be used individually, or two or more thereof may be used in combination.

Examples of the hindered phenol-based thermal stabilizer include 1,3,5-tris(3,5-di-tert-butyl-4-hydroxybenzyl)-1,3,5-triazine-2,4,6(1H,3H,5H)-trione, octadecyl 3-(3,5-di-tert-butyl-4-hydroxyphenyl)propionate, pentaerythritol tetrakis[3-(3,5-di-tert-butyl-4-hydroxyphenyl)propionate], 3,9-bis{2-[3-(3-tert-butyl-4-hydroxy-5-methylphenyl)propionyloxy]-1,1-dimethylethyl}-2,4,8,10-tetraoxaspiro[5,5]undecane, and 1,3,5-tris(3,5-di-tert-butyl-4-hydroxyphenylmethyl)-2,4,6-trimethylbenzene. Among these, octadecyl 3-(3,5-di-tert-butyl-4-hydroxyphenyl)propionate and pentaerythritol tetrakis[3-(3,5-di-tert-butyl-4-hydroxyphenyl)propionate] are preferred.

Examples of the phosphorus-based thermal stabilizer include tris(2,4-di-t-butylphenyl)phosphite, 2-[[2,4,8,10-tetrakis(1,1-dimethylethyl)dibenzo[d,f][1,3,2]dioxaphosphepin-6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine, diphenyltridecyl phosphite, triphenyl phosphite, 2,2-methylenebis(4,6-di-tert-butylphenyl)octylphosphite, and bis(2,6-di-tert-butyl-4-methylphenyl)pentaerythritol diphosphite. Among these, 2,2-methylenebis(4,6-di-tert-butylphenyl)octylphosphite is preferred.

Examples of the organic disulfide compound include dimethyldisulfide, diethyldisulfide, di-n-propyldisulfide, di-n-butyldisulfide, di-sec-butyldisulfide, di-tert-butyldisulfide, di-tert-amyldisulfide, dicyclohexyldisulfide, di-tert-octyldisulfide, di-n-dodecyldisulfide, and di-tert-dodecyldisulfide. Among these, di-tert-alkyldisulfide is preferred, and di-tert-dodecyldisulfide is more preferred.

The use amount of the thermal stabilizer is preferably 1 to 2,000 ppm by weight relative to the weight of the methacrylic resin(s) contained in the obtained methacrylic resin composition. When the methacrylic resin composition (more specifically, the methacrylic resin composition after devolatization) of the present invention is molded to yield a molded article from the methacrylic resin composition, the molding temperature may be set to be somewhat higher for the purpose of improving the molding efficiency. In this case, when the thermal stabilizer is blended, an enhanced effect is achieved.

Examples of the type of the UV absorbing agent include a benzophenone-based UV absorbing agent, a cyanoacrylate-based UV absorbing agent, a benzotriazole-based UV absorbing agent, a malonic acid ester-based UV absorbing agent, and an oxalanilide-based UV absorbing agent. The UV absorbing agents may each be used individually, or two or more thereof may be used in combination. Among these, the benzotriazole-based UV absorbing agent, the malonic acid ester-based UV absorbing agent, and the oxalanilide-based UV absorbing agent are preferred.

Examples of the benzophenone-based UV absorbing agent include 2,4-dihydroxybenzophenone, 2-hydroxy-4-methoxybenzophenone, 2-hydroxy-4-methoxybenzophenone-5-sulfonic acid, 2-hydroxy-4-octyloxybenzophenone, 4-dodecyloxy-2-hydroxybenzophenone, 4-benzyloxy-2-hydroxybenzophenone, and 2,2'-dihydroxy-4,4'-dimethoxybenzophenone.

Examples of the cyanoacrylate-based UV absorbing agent include ethyl 2-cyano-3,3-diphenylacrylate and 2-ethylhexyl 2-cyano-3,3-diphenylacrylate.

Examples of the benzotriazole-based UV absorbing agent include 2-(2-hydroxy-5-methylphenyl)-2H-benzotriazole, 5-chloro-2-(3,5-di-t-butyl-2-hydroxyphenyl)-2H-benzotriazole, 2-(3-t-butyl-2-hydroxy-5-methylphenyl)-5-chloro-2H-benzotriazole, 2-(3,5-di-t-pentyl-2-hydroxyphenyl)-2H-benzotriazole, 2-(3,5-di-t-butyl-2-hydroxyphenyl)-2H-benzotriazole, 2-(2H-benzotriazol-2-yl)-4-methyl-6-(3,4,5,6-tetrahydrophthalimidylmethyl)phenol, and 2-(2-hydorxy-5-t-octylphenyl)-2H-benzotriazole.

As the malonic acid ester-based UV absorbing agent, 2-(1-arylalkylidene) malonic acid esters are generally used, and examples thereof include dimethyl 2-(paramethoxybenzylidene) malonate.

As the oxalanilide-based UV absorbing agent, 2-alkoxy-2'-alkyloxalanilides are generally used, and examples thereof include 2-ethoxy-2'-ethyloxalanilide.

The use amount of the UV absorbing agent is preferably 5 to 1,000 ppm by weight relative to the weight of the methacrylic resin(s) contained in the obtained methacrylic resin composition.

As to the conditions (II) to (IV), the molecular weight of the methacrylic resin(s) contained in the present resin composition and the measurement method therefor will be described in detail.

The molecular weight distribution of the methacrylic resin(s) contained in the present resin composition can be determined using traditionally known size exclusion chromatography (SEC) (for example, gel permeation chromatography (GPC)) according to JIS K 7252-1 to -4 (Plastic-Determination Method of Average Molecular Weight and Molecular Weight Distribution of Polymeric Molecules Using Size Exclusion Chromatography-Part 1 to Part 4).

More specifically, a calibration curve (showing the correlation between an elution time period (t) and the logarithm (logM) of the molecular weight (M)) is first produced in advance using a commercially available standard substance of methacrylic resin with mono-dispersity molecular weight (a standard substance whose molecular weights such as the number average molecular weight and the weight average molecular weight are known and whose molecular weight distribution is narrow).

Next, a sample containing the methacrylic resin(s) to be measured (that is, a methacrylic resin composition) is dissolved in a proper solvent to prepare a dilute solution. This solution is injected into the mobile phase (the eluent) to be led into a SEC column. The SEC column is filled with non-absorbent fine particles having fine pores of a uniform size or of various sizes. The sample may be separated from each other according to the difference in molecular weight (hydrodynamic volume) as the sample passes through the SEC column. In the SEC column, the methacrylic resin having a high molecular weight cannot permeate into the fine pores and therefore elutes sooner. On the other hand, the methacrylic resin having a low molecular weight can permeate into the fine pores and therefore elutes later. The concentration of the methacrylic resin in the eluent is continuously detected using a concentration detector to acquire a SEC chromatogram.

The molecular weight (M) of the methacrylic resin corresponding to an arbitrary elution time period (t) in the SEC chromatogram is determined using the calibration curve produced in advance using the mono-dispersity molecular weight standard substance.

The average molecular weight and the molecular weight distribution of the methacrylic resin can be determined by calculation from the data of the molecular weight and the concentration of the methacrylic resin corresponding to each elution time period.

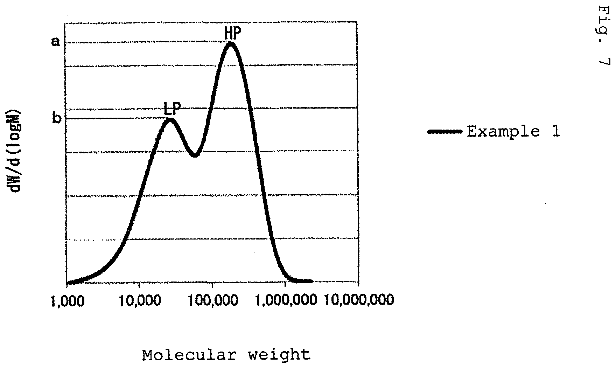

Further, a "differential molecular weight distribution curve" is produced (see, for example, Fig. 7) by plotting dW/d(logM) against the molecular weight (M) of the methacrylic resin based on the data obtained as above.

More specifically, the differential molecular weight distribution curve can be produced by plotting $dW_i/d(logM_i)$ against the molecular weight ($M_i$) of the methacrylic resin, wherein $dW_i/d(logM_i)$ is calculated according to equations below from the molecular weight ($M_i$) of the methacrylic resin and the signal intensity ($H_i$) thereof at each elution time period ($t_i$).

[Eq. 1]

$$\Delta W_i = \frac{H_i}{\sum_{i=1}^{n} H_i}$$

$$w_i = \Delta W_i \times \frac{1}{I}$$

$$\frac{dW_i}{d(\log M_i)} = -w_i \times \frac{dt_i}{d(\log M_i)}$$

In the equations, "I" represents the data collection interval (min).

As above, the methacrylic resin composition of the present invention is characterized in that the methacrylic resin composition comprises at least two methacrylic resins differing in peak molecular weight from each other. The two methacrylic resins differing in peak molecular weight from each other can be recognized on, for example, the differential molecular weight distribution curve produced as above (see, for example, Fig. 7).

As above, in the present invention, among the methacrylic resins, a higher (preferably, the highest) peak molecular weight is denoted by "HP" and a lower peak molecular weight (preferably, the second highest peak molecular weight to HP) is denoted by "LP".

In the present invention, on the differential molecular weight distribution curve, when the value representing the height of the peak at HP (the value of dW/d(logM)) is denoted as "a" (see, for example, Fig. 7) and the value representing the height of the peak at LP (the value of dW/d(logM)) is denoted as "b" (see, for example, Fig. 7), the value of "PR" defined by "a/b" is calculated.

As defined by the conditions (II) to (IV), in the present invention, the above effect can be achieved by setting the values of "HP", "LP", and "PR" each to be within the prescribed range.

More specifically, as defined by the condition (II), the value of "HP" is 180,000 to 220,000 and is, preferably, 180,000 to 200,000. When the value of HP is larger than 220,000, the fluidity may not be good. When the value of HP is smaller than 180,000, the tensile strength, the solvent resistance, and the stringing resistance may not be good.

As defined by the condition (III), the value of "LP" is 24,000 to 35,000 and is, preferably, 25,000 to 28,000. When the value of LP is larger than 35,000, the fluidity may not be good. When the value of LP is smaller than 24,000, the heat resistance and the tensile strength may not be good.

As defined by the condition (IV), the value of "PR" is 1.32 to 1.60 and is, preferably, 1.35 to 1.40. When the value of PR is larger than 1.60, the fluidity may not be good. When the value of PR is smaller than 1.32, the tensile strength may not be good.

It is considered that the value of PR also relates to the rate of the other substances each having a low molecular weight contained in the methacrylic resin composition. The value of PR can also be increased by increasing the ratio of the substances each having a low molecular weight.

Surprisingly, in the present invention, it becomes possible to provide a methacrylic resin composition that maintains all physical properties including good solvent resistance, good heat resistance, good mechanical strength, and good stringing resistance, that has especially good fluidity, and that is also good in the thermal stability, by satisfying all the conditions (I) to (IV). The evaluation criteria for each of the "fluidity", the "thermal stability", the "solvent resistance", the "heat resistance", the "mechanical strength", and the "stringing resistance" will be described in detail with reference to Examples below.

As above, the present resin composition is characterized by comprising at least the methacrylic resin having the high molecular weight and the HP value (hereinafter, referred to as "HP resin") and the methacrylic resin having the molecular weight lower than the above and the LP value (hereinafter, referred to as "LP resin") (see, for example, Fig. 7).

In the present invention, the present resin composition may be produced by polymerizing each of the HP resin and the LP resin individually to be prepared and kneading these two resins in an extruder.

Otherwise, using multi-stage polymerization, the present resin composition may be produced by, for example, in the presence of a composition (a syrup) comprising one of the resins, polymerizing the monomer components capable of forming the other resin and, thereafter, kneading thus obtained syrup in an extruder.

With the method of polymerizing each of the HP resin and the LP resin individually to be prepared and thereafter kneading these two resins in an extruder, the molecular weight may sectionally vary due to insufficient mixing or the like. Therefore, it is preferable to produce the methacrylic resin composition using the multi-stage polymerization method.

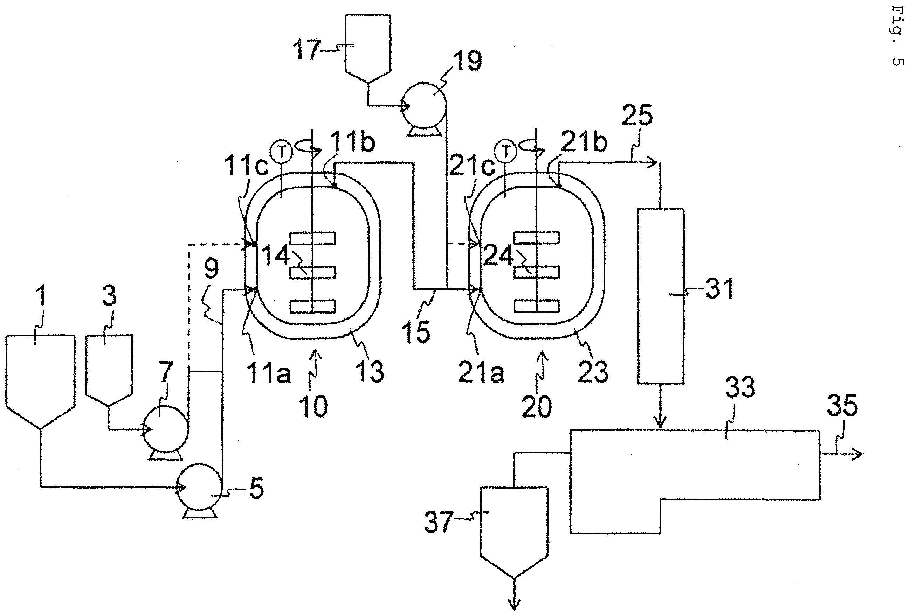

The multi-stage polymerization is conducted, for example, as depicted in Fig. 5 as exemplification, using two reaction tanks (preferably, reaction tanks of complete mixing type (hereinafter, may be referred to as "complete mixing tanks")) and, preferably, continuous bulk polymerization is conducted in each of the reaction tanks. For example, the HP resin having the high molecular weight can be prepared in a first reaction tank 10 and the LP resin having the molecular weight lower than that of the HP resin can be prepared in the presence of the HP resin in a second reaction tank 20.

The resin composition satisfying all the conditions (I) to (IV) and good in the above properties and the transparency can be provided by producing the methacrylic resin composition that comprises at least the HP resin and the LP resin as the methacrylic resins using the multi-stage polymerization.

When the methacrylic resin composition is produced using the multi-stage polymerization, the value of HP can be adjusted by, for example, the concentration of the chain transfer agent in the first reaction tank 10. For example, the value of HP can be increased by reducing the concentration of the chain transfer agent in the first reaction tank. In the present invention, however, the value of HP needs to be a value that satisfies the condition (II).

More specifically, in the first reaction tank 10, when the temperature in the reaction tank is 110 to 160°C, preferably 110 to 150°C, and more preferably 120 to 140°C, the concentration of the chain transfer agent is preferably 0.08 to 0.10% by weight relative to the total weight of the raw material monomers supplied to the first reaction tank. In the first reaction tank at a temperature in the above temperature ranges, when the concentration of the chain transfer agent is in the above range, the HP value can satisfy the condition (II). The adjustment of the HP value is however not limited to the above adjustment method.

In the first reaction tank 10, when the temperature in the reaction tank is lower than 110°C, the chain transfer tends to avoid taking place during the polymerization and the value of HP tends to be high.

In the first reaction tank 10, when the temperature in the reaction tank exceeds 160°C, the chain transfer tends to take place during the polymerization and the value of HP tends to be low.

In the first reaction tank 10, when the temperature in the reaction tank is outside the above ranges, the condition (II) can also be satisfied for the value of HP by adjusting the concentration of the chain transfer agent to be in a range different from the above.

In contrast, the value of LP can be adjusted using, for example, the concentration of the chain transfer agent in the second reaction tank 20. For example, the value of LP can be increased by reducing the concentration of the chain transfer agent in the second reaction tank. In the present invention, however, the value of LP needs to be the value that satisfies the condition (III).

More specifically, in the second reaction tank 20, when the temperature in the reaction tank is 170 to 190°C and preferably 175 to 185°C, the concentration of the chain transfer agent is preferably 0.40 to 0.60% by weight relative to the total weight of the raw material monomers supplied to the second reaction tank. Within the above temperature ranges, in the second reaction tank, when the concentration of the chain transfer agent is in the above range, the value of LP can satisfy the condition (III). The adjustment of the LP value is however not limited to the above adjustment method.

In the second reaction tank 20, when the temperature in the reaction tank is lower than 170°C, the chain transfer tends to avoid taking place during the polymerization and the value of LP tends to be high.

In the second reaction tank 20, when the temperature in the reaction tank exceeds 190°C, the chain transfer tends to take place during the polymerization and the value of LP tends to be low.

In the second reaction tank 20, when the temperature in the reaction tank is outside the above ranges, the condition (III) can be satisfied for the value of LP by adjusting the concentration of the chain transfer agent to be in a range different from the above.

In the multi-stage polymerization, the value of PR can be adjusted using, for example, the polymerization rate in each of the first reaction tank 10 and the second reaction tank 20. In the present invention, however, the value of PR needs to be the value that satisfies the condition (IV). The adjustment of the PR value is not limited to the adjustment of the polymerization rates.

For example, the value of PR can be increased by increasing the polymerization rate in the first reaction tank or by reducing the polymerization rate in the second reaction tank.

The polymerization rate in each of the reaction tanks can be adjusted using the concentration of the polymerization initiator.

In the present invention, when the LP value is outside the target range defined by the condition (III), the molecular weight of the LP resin can also be adjusted by varying the concentration of the chain transfer agent in the second reaction tank while, but also the PR value may somewhat be varied when the tails of the peaks of the LP resin and the HP resin overlap with each other. Thus, it is desirable that the value of LP is first adjusted to be within the target range of the condition (III), the polymerization rate thereof is thereafter adjusted, and the PR value is thereby adjusted to be within the range of the condition (IV).

In this manner, the methacrylic resin composition of the present invention can satisfy all the conditions (I) to (IV) by using the multi-stage polymerization. In the present invention, however, the achievement of the conditions (I) to (IV) is not limited to the adjustment using the multi-stage polymerization.

The methacrylic resin composition of the present invention is good in solvent resistance, heat resistance, mechanical strength, and stringing resistance and is also good in fluidity and thermal stability by satisfying all the conditions (I) to (IV), is therefore advantageously used for various molded articles, for example, vehicle members such as a tail lamp cover, a head lamp cover, a visor, and a cover of an indicator panel, optical members such as a lens, a display protective plate, an optical film, and a light guide plate, and members of a cosmetic container, and is especially advantageously usable as, above all, a molding material of the vehicle members. Especially, the methacrylic resin composition of the present invention is good in the above properties, is especially good in, above all, the fluidity, and is therefore advantageously usable as a raw material resin composition for an injection molding method.

Examples

The present invention will be described in more detail below with reference to Examples and Comparative Examples while the present invention is not limited to Examples.

Detailed description will be made for the evaluation method for each of the "fluidity", the "thermal stability", the "solvent resistance", the "heat resistance", the "mechanical strength", and the "stringing resistance".

<Evaluation Method for "Fluidity">

Each of the methacrylic resin compositions of Examples and Comparative Examples below was injected from the central portion of a circular spiral mold into the inside of the mold to mold an injection-molded article using an injection molding machine ("150D model" manufactured by Fanuc Corporation). The reach (mm) of the methacrylic resin composition in the mold in this case was measured (hereinafter, may be referred to as "spiral flowing length" (mm)). The reach was determined by reading a scale transferred from the mold onto the injection-molded article. A longer reach indicated that the methacrylic resin composition was better in the fluidity. The injection conditions and the circular mold used for the evaluation were as follows.

Molding Temperature: 260°C
Mold Temperature: 60°C
Injection Velocity: 80 mm/sec
Injection Pressure: 150 MPa
Circular Spiral Mold: A circular spiral mold having a thickness of 2 mm and a width of 10 mm was used.

<Evaluation Method for "Thermal Stability">

Using a thermogravimetric measurement-differential thermal analysis (TG-DTA) apparatus (manufactured by SII Nano-Technology Co., Ltd., "TG/DTA 6300"), change in weight of each of the methacrylic resin compositions of Examples and Comparative Examples below was measured while increasing the temperature from 40°C to 510°C at a temperature increase rate of 2°C/min with a nitrogen flow rate of 200 mL/min to determine the temperature at which the reduction in the weight of the methacrylic resin composition corresponded to 5% of the initial weight thereof (hereinafter, may be referred to as "5%-weight decomposition temperature" (°C)). A higher 5%-weight decomposition temperature indicated higher excellence in the thermal stability.

<Evaluation Method for "Solvent Resistance">

Each of the methacrylic resin compositions of Examples and Comparative Examples below was injection-molded using an injection molding machine ("140T model" manufactured by Meiki Co., Ltd.) to obtain a flat plate having a length of 250 mm, a width of 25.4 mm and a thickness of 3 mm. The injection conditions were as follows.

Molding Temperature: 250°C
Mold Temperature: 60°C

The obtained flat plate was dried for 5 hours in a vacuum dryer at 80°C and was thereafter put in a desiccator to obtain a specimen (having a length of 250 mm, a width of 25.4 mm and a thickness of 3 mm).

A solvent resistance test was conducted using the obtained specimens. This test was conducted in a constant-temperature and constant-humidity room at 23°C and 40%RH. A cantilever method was employed as the testing method and the test was conducted according to the following procedure of (a) to (d).

(a) One end of the specimen was supported by being sandwiched by a fixation base and the specimen was also supported from the lower side of the specimen at a position (a fulcrum point) at 146 mm from the fixation position to maintain the specimen to be horizontal.
(b) A load was applied to the other end of the specimen to cause a prescribed surface stress to be generated on the specimen.
(c) Ethanol ("first class grade reagent ethanol" produced by Wako Pure Chemical Industries, Ltd.) was applied to the upper face of the specimen. Ethanol was regularly applied thereto to avoid losing ethanol due to its volatilization.
(d) The time period (sec) from the start of the application of ethanol to generation of crazing on the specimen was measured. Using this method, a "crazing generation time period" (sec) with the surface stress of 18.6 MPa was measured to evaluate the solvent resistance of the specimen. A longer crazing generation time period indicated higher excellence in the solvent resistance.

The load against the prescribed surface stress was calculated according to the equation (i) below.

$$\text{Surface stress (MPa)} = [(6 \times A \times B)/(C \times D^2)] \times 10^{-6} \ ...(i)$$

A: Load (N)
B: Length from the fulcrum point to the position at which the load was applied (m)
C: Width of the specimen (m)
D: Thickness of the specimen (m)

<Evaluation Method for "Heat Resistance">

For the specimen produced by the injection molding using each of the methacrylic resin compositions of Examples and Comparative Examples below, the Vicat softening temperature (°C) was measured using a heat distortion tester ("148-sextuplet type" manufactured by Yasuda Seikiseisakusho Ltd.) according to JIS K7206 (B50 Method). A higher Vicat softening temperature indicated higher excellence in the heat resistance.

<Evaluation Method for "Mechanical Strength" (Tensile Strength)>

According to JIS K7162, a specimen was produced by injection molding and a tensile test was conducted on the specimen at a rate of 5 mm/min to determine the "tensile failure stress" (MPa) thereof. A higher tensile failure stress indicated higher excellence in the tensile strength.

<Evaluation Method for "Stringing Resistance">

(Method of the production of a specimen for conducting Evaluation Test of Stringing Resistance)

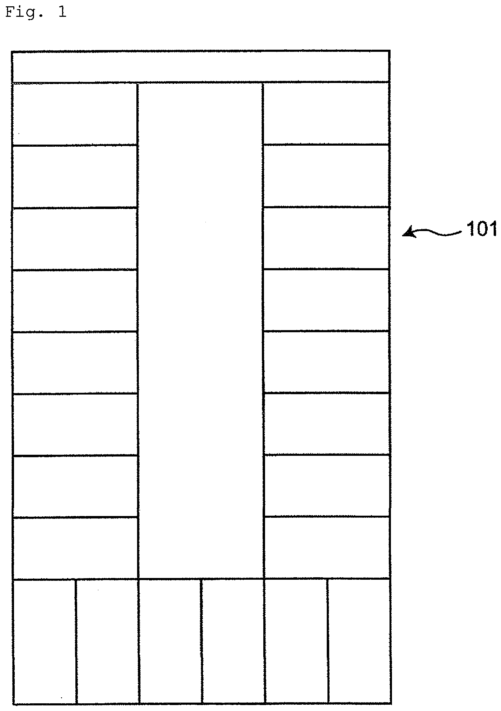

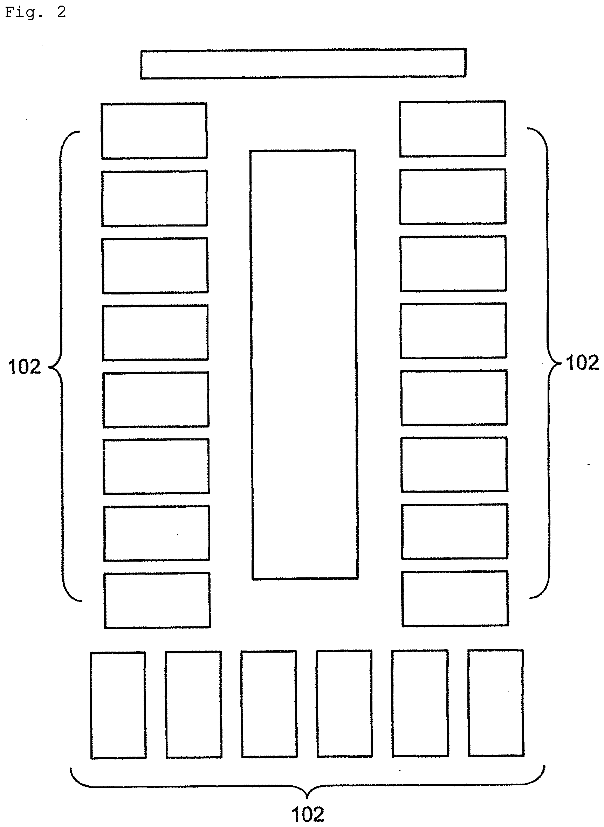

Using each of the methacrylic resin compositions of Examples and Comparative Examples below to be subjected to the evaluation test, a flat plate (101) having a longitudinal length of 210 mm, a lateral length of 120 mm and a thickness of 3 mm was produced at the molding temperature of 240°C and the mold temperature of 60°C (see Fig. 1) using an injection molding machine ("IS130II model" manufactured by Toshiba Corporation).
Then, this flat plate (101) was cut into pieces each having a longitudinal length of 20 mm, a lateral length of 40 mm and a thickness of 3 mm as depicted in Fig. 2 using a panel saw to produce a total of 22 specimens (102).
Fig. 1 is a schematic view of a flat plate (101) before cutting, that is viewed from the upper side thereof. Fig. 2 is a schematic view of the specimens (102) after cutting, that is viewed from the upper side thereof.

(Evaluation Testing Method of Stringing Resistance)

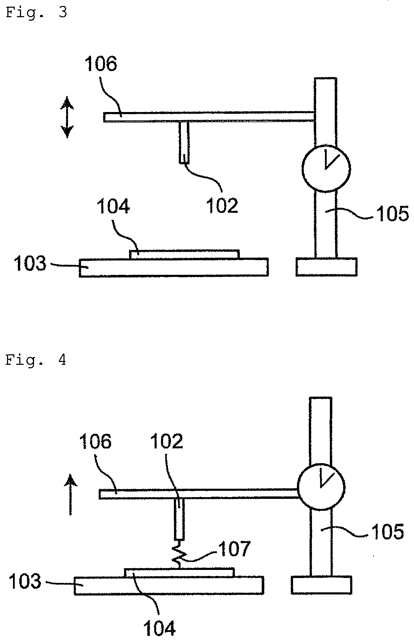

An evaluation testing method for the stringing resistance of the methacrylic resin compositions of Examples and Comparative Examples below will be described in detail with reference to Fig. 3 and Fig. 4. Fig. 3 is a schematic view of an example of the state before the start of the evaluation test, and Fig. 4 is a schematic view of an example of the state where the specimen (102) of the methacrylic resin composition strings in the evaluation test.

As depicted in Fig. 3, a SUS-34 plate having a longitudinal length of 15 cm, a lateral length of 15 cm and a thickness of 3 mm was placed on a hot plate (103) to be used as a heat plate (104). On the other hand, an aluminum rod (106) was clamped by a height gauge (105) whose height was adjustable, and then the specimen (102) of the methacrylic resin composition having a longitudinal length of 20 mm, a lateral length of 40 mm and a thickness of 3 mm obtained by the above production method was fixed to the aluminum rod (106) using a clip.

The specimen (102) was pushed for 20 seconds to the heat plate (104) heated to a prescribed temperature at the specimen's face (20 mm × 3 mm) not cut by the panel saw in the production of the specimen (102), so that the contact portion of the specimen (102) was thereby melted on the heat plate (104). The specimen (102) was thereafter lifted up as depicted in Fig. 4, and the length of stringing (107) was measured with the scale of the height gauge (105).

The above operation was repeated for 10 times to determine the average value of the lengths of the stringing of the specimens at the prescribed temperature. The temperature of the heat plate was increased by 10°C for each time from the initial temperature of 230°C to continue the measurement. The temperature at which the average value of the lengths of the stringing first became equal to or longer than 10 mm was taken as the "stringing start temperature" (°C). A higher stringing start temperature indicated higher excellence in the stringing resistance.

An evaluation method for the methacrylic resin composition using pyrolysis gas chromatography will be described in detail.

<Evaluation Method for Methacrylic Resin Composition>

Pellets of each of the methacrylic resin compositions obtained in Examples and Comparative Examples described below was analyzed using pyrolysis gas chromatography under the following conditions and the methacrylic resin composition was evaluated by, for example, measuring each of the peak areas that corresponded to methyl methacrylate and the acrylic acid ester used as the monomer components.

(Conditions for Pyrolysis)

Preparation of Specimen: The methacrylic resin composition was precisely weighed (2 to 3 mg as a guidepost) and was put in the central portion of a metallic cell that was formed to have a watershoot shape. The metallic cell was folded to encapsulate the composition by lightly pressing the ends thereof using a pair of pliers.
Pyrolysis Apparatus: CURIE POINT PYROLYZER JHP-22 (manufactured by Japan Analytical Industry Co., Ltd.)
Metallic Cell: Pyrofoil F590 (manufactured by Japan Analytical Industry Co., Ltd.)
Set Temperature of Constant-Temperature Tank: 200°C
Set Temperature of Heat Retention Pipe: 250°C
Pyrolysis Temperature: 590°C
Pyrolysis Time Period: 5 sec

(Analysis Conditions for Gas Chromatography)

Gas Chromatography Analyzing Apparatus: GC-14B (manufactured by Shimadzu Corporation)
Detection Method: FID
Column: 7G, 3.2 m × 3.1 mm $\phi$ (manufactured by Shimadzu Corporation)
Filling Agent: FAL-M (manufactured by Shimadzu Corporation, a packed column)
Carrier Gas: Air/$N_2$/$H_2$=50/100/50 (kPa), 80 ml/min
Temperature Increase Condition for Column: Maintaining at 100°C for 15 minutes, then increasing the temperature at a rate of 10°C/min to 150°C, and then maintaining at 150°C for 14 minutes.
INJ Temperature: 200°C
DET Temperature: 200°C

When each of the methacrylic resin compositions was thermally decomposed under the above conditions for the pyrolysis and thus resultant decomposed product was subjected to the measurement under the above analysis conditions for the gas chromatography, the peak area (a1) corresponding to methyl methacrylate and the peak area (b1) corresponding to the acrylic acid ester, which were detected thereby, were measured. From these peak areas, peak area ratio A (=b1/a1) was determined.

On the other hand, a methacrylic resin standard substance whose weight ratio of the acrylic acid ester unit to the methyl methacrylate unit was W0 (known) (the weight of the acrylic acid ester unit/the weight of the methyl methacrylate unit) was thermally decomposed under the above conditions for the pyrolysis, and thus resultant decomposed product was subjected to the measurement under the above analysis conditions for the gas chromatography, the peak area (a0) corresponding to methyl methacrylate and the peak area (b0) corresponding to the acrylic acid ester, which were detected thereby, were measured. From these peak areas, peak area ratio A0 (= b0/a0) was determined.

A factor f (= W0/A0) was determined from the peak area ratio A0 and the weight ratio W0.

Then, the weight ratio W of the acrylic acid ester unit to the methyl methacrylate unit (the weight of the acrylic acid ester unit/the weight of the methyl methacrylate) in the methacrylic resin(s) contained in the methacrylic resin composition to be measured was determined by multiplying the peak area ratio A by the factor f. From this weight ratio W, the ratio of the methyl methacrylate unit (% by weight) and the ratio of the acrylic acid ester unit (% by weight) relative to the total of the methyl methacrylate unit and the acrylic acid ester unit were each calculated. In each of Examples and Comparative Examples below, especially, the ratio of the methyl methacrylate unit (% by weight) and the ratio of the methyl acrylate unit (% by weight) in the methacrylic resin(s) contained in the methacrylic resin composition were determined.

(Measurement Conditions for GPC in Examples and Comparative Examples)

Measuring Apparatus: HLC-8220 manufactured by Tosoh Corporation
Column: Two columns of TSKgel super HM-H and one column of SuperH 2500 were connected in series.
Detector: RI detector
Preparation of Solution: THF was used as the solvent and a 0.05% solution of the sample was used.
Column Temperature: 40°C
Injected Amount: 20 μL
Flow Rate: 0.6 ml/min

The RI detected intensity to the elution time period of each of the methacrylic resins was measured under these conditions. The values of the parameters (HP, LP, and PR) of each of the methacrylic resins were determined based on the areas on the GPC elution curve and the calibration curve.

Seven types of mono-dispersity methacrylic resin (Shodex STANDARD M-75 produced by Showa Denko K.K.) whose weight average molecular weights were known and whose molecular weights were different from each other as below were used as the standard samples for the calibration curve.

| | Weight Average Molecular Weight |
|---|---|
| Standard Specimen 1 | 927,000 |
| Standard Specimen 2 | 524,000 |
| Standard Specimen 3 | 203,000 |
| Standard Specimen 4 | 62,200 |
| Standard Specimen 5 | 20,000 |
| Standard Specimen 6 | 6,570 |
| Standard Specimen 7 | 2,920 |

(Example 1)

In this Example, as an overview, with reference to Fig. 5, the methacrylic resin composition was produced in the form of pellets by conducting the continuous polymerization in two stages according to the exemplified embodiment described above. More specifically, the production was as follows.

In order to produce the methacrylic resin composition in this Example, the apparatus depicted in Fig. 5 was used. A complete mixing type reaction tank having a capacity of 13 L was used as a first reaction tank 10 and a complete mixing type reaction tank having a capacity of 8 L was used as a second reaction tank 20.

In the first reaction tank 10, 99.2948 parts by mass of methyl methacrylate, 0.5000 parts by mass of methyl acrylate, 0.098 parts by mass of a chain transfer agent [n-octylmercaptan], 0.1000 part by mass of a mold release agent [stearyl alcohol], and 0.0072 parts by mass of a polymerization initiator [t-amylperoxy-2-ethylhexanoate] were mixed together to produce a syrup 1.

The flow rate was adjusted such that the residence time period of the syrup 1 in the first reaction tank 10 was 61.6 minutes.

In this case, the polymerization rate of the syrup 1 was 44%. (The polymerization rate of the syrup 1 was a value obtained by including therein the polymerization in each of the second reaction tank 20, a devolatilization extruder 33 and so on in addition to the polymerization in the first reaction tank 10, and was the value obtained by dividing the production amount of the pellets per unit time obtained from the devolatilization extruder 33 by the supply amount per unit time of the monomers (the total thereof). In the second reaction tank 20, thereafter, a polymerization inhibitor solution (a solution formed by dissolving 0.000050 parts by mass of 2,6-bis(tert-butyl)-4-methylphenol into 99.99995 parts by mass of the monomers (the total thereof)) and the syrup 1 were mixed together at the mass ratio of 1:9.7.)

The temperature (T1) in the first reaction tank 10 was 140°C, the temperature of a jacket 13 surrounding the outer wall face of the first reaction tank 10 was set to be 140°C, and the continuous polymerization was conducted in an adiabatic state where substantially no heat enters and exits.

A raw material monomer solution 2 was prepared to be supplied to the second reaction tank 20. The raw material monomer solution 2 was formed by mixing together 94.05 parts by mass of methyl methacrylate, 0.50 parts by mass of methyl acrylate, 5.35 parts by mass of a chain transfer agent [n-octylmercaptan], and 0.10 part by mass of a polymerization initiator [1,1-di(t-butylperoxy)cyclohexane].

The flow rates were adjusted such that the raw material monomer solution 2 and the syrup 1 were mixed together at the mass ratio of 1:9.7 in the second reaction tank 20. The residence time period of the mixture in the second reaction tank 20 was 36.6 minutes.

The temperature (T2) in the second reaction tank 20 was 175°C, the temperature of a jacket 23 surrounding the outer wall face of the second reaction tank 20 was set to be 175°C, and the continuous polymerization was conducted in an adiabatic state where substantially no heat enters and exits, to produce a syrup 2.

The polymerization rate of the syrup 2 was 56%. The polymerization rate of the syrup 2 was determined by dividing the production amount of the pellets per unit time by the supply amount per unit time of the monomers (the total thereof).

The continuous polymerization was conducted in the state where the first reaction tank 10 and the second reaction tank 20 were each filled with the reaction mixture (the mixture liquid) to have substantially no gas phase present therein (the state fully filled with liquid).

The reaction mixture in the second reaction tank 20 was continuously taken out as the methacrylic resin composition from an effluent port 21b positioned at the top of the second reaction tank 20. The methacrylic resin composition obtained thereby was passed through an effluent line 25 and was heated to 200°C by a preheater 31. The volatile components such as unreacted raw material monomers were removed therefrom at 250°C by the devolatilization extruder 33 including a vent. The methacrylic resin composition after the devolatilization was extruded in its molten state, was cooled by water, and was thereafter cut and discharged from a discharge line 35 as pellets. The methacrylic resin composition was thereby produced in the form of pellets (hereinafter, referred to as "methacrylic resin composition of Example 1").

For reference, only the methacrylic resin corresponding to the high molecular weight substance component included in the methacrylic resin composition obtained as above (hereinafter, referred to as "high molecular weight methacrylic resin") was separately produced in the form of pellets, similarly to the above production method except that a polymerization inhibitor solution (a solution formed by dissolving 0.000050 parts by mass of 2,6-bis(tert-butyl)-4-methylphenol in 99.99995 parts by mass of the monomers) was supplied instead of the raw material monomer solution 2 into the second reaction tank 20.

The obtained pellets were used for each of the types of evaluation.

(Example 2)

In this Example, the methacrylic resin composition and the high molecular weight methacrylic resin were each produced in the form of pellets similarly to Example 1 except the following points.

In the first reaction tank 10, 99.2948 parts by mass of methyl methacrylate, 0.5000 parts by mass of methyl acrylate, 0.093 parts by mass of a chain transfer agent [n-octylmercaptan], 0.1000 part by mass of a mold release agent [stearyl alcohol], and 0.0088 parts by mass of a polymerization initiator [t-amylperoxy-2-ethylhexanoate] were mixed together to produce the syrup 1. The residence time period of the syrup 1 in the first reaction tank 10 was 46.0 minutes. The temperature (T1) in the first reaction tank 10 was 135°C, the temperature of the jacket 13 surrounding the outer wall face of the first reaction tank 10 was 135°C, and the continuous polymerization was conducted in an adiabatic state where substantially no heat enters and exits.

The raw material monomer solution 2 was prepared to be supplied to the second reaction tank 20. In this Example, the raw material monomer solution 2 was formed by mixing together 94.05 parts by mass of methyl methacrylate, 0.50 parts by mass of methyl acrylate, 6.04 parts by mass of a chain transfer agent [n-octylmercaptan], and 0.05 parts by mass of a polymerization initiator [1,1-di(t-butylperoxy)cyclohexane].

The flow rates were adjusted such that the raw material monomer solution 2 and the syrup 1 were mixed together at the ratio of 1:11.1 in the second reaction tank 20. The residence time period of the mixture in the second reaction tank 20 was 27.7 minutes.

The temperature (T2) in the second reaction tank 20 was 175°C, the temperature of the jacket 23 surrounding the outer wall face of the second reaction tank 20 was 175°C, and the continuous polymerization was conducted in an adiabatic state where substantially no heat enters and exits, to produce the syrup 2. The polymerization rate of the syrup 2 was 49%. The polymerization rate of the syrup 2 was determined by dividing the production amount of the pellets per unit time by the supply amount per unit time of the monomers (the total thereof). The continuous polymerization was conducted in the state where the first reaction tank 10 and the second reaction tank 20 were each filled with the reaction mixture (the mixture liquid) to have substantially no gas phase present therein (the state fully filled with liquid).

(Example 3)

In this Example, the methacrylic resin composition and the high molecular weight methacrylic resin were each produced in the form of pellets similarly to Example 1 except the following points.

The raw material monomer solution 2 was prepared to be supplied to the second reaction tank 20. In this Example, the raw material monomer solution 2 was formed by mixing together 89.91 parts by mass of methyl methacrylate, 0.50 parts by mass of methyl acrylate, 9.47 parts by mass of a chain transfer agent [n-octylmercaptan], and 0.12 parts by mass of a polymerization initiator [1,1-di(t-butylperoxy)cyclohexane]. The polymerization rate of the obtained syrup 2 was 58%.

(Example 4)

In this Example, the methacrylic resin composition and the high molecular weight methacrylic resin were each produced in the form of pellets similarly to Example 1 except the following points.

In the first reaction tank 10, 98.5992 parts by mass of methyl methacrylate, 1.2000 parts by mass of methyl acrylate, 0.093 parts by mass of a chain transfer agent [n-octylmercaptan], 0.1000 part by mass of a mold release agent [stearyl alcohol], and 0.0078 parts by mass of a polymerization initiator [t-amylperoxy-2-ethylhexanoate] were mixed together to produce the syrup 1.

The polymerization rate of the obtained syrup 1 was 45%.

The raw material monomer solution 2 was prepared to be supplied to the second reaction tank 20. In this Example, the raw material monomer solution 2 was formed by mixing together 93.37 parts by mass of methyl methacrylate, 1.20 parts by mass of methyl acrylate, 5.35 parts by mass of a chain transfer agent [n-octylmercaptan], and 0.08 parts by mass of a polymerization initiator [1,1-di(t-butylperoxy)cyclohexane].

The polymerization rate of the obtained syrup 2 was 56%.

(Example 5)

In this Example, the methacrylic resin composition was produced in the form of pellets similarly to Example 1 except the following points.

In the first reaction tank 10, 99.3686 parts by mass of methyl methacrylate, 0.5300 parts by mass of methyl acrylate, 0.0930 parts by mass of a chain transfer agent [n-octylmercaptan], and 0.0084 parts by mass of a polymerization initiator [t-amylperoxy-2-ethylhexanoate] were mixed together to produce the syrup 1. The residence time period of the syrup 1 in the first reaction tank 10 was 62 minutes. The temperature (T1) in the first reaction tank 10 was 127°C, the temperature of the jacket 13 surrounding the outer wall face of the first reaction tank 10 was 127°C, and the continuous polymerization was conducted in an adiabatic state where substantially no heat enters and exits.

The raw material monomer solution 2 was prepared to be supplied to the second reaction tank 20. In this Example, the raw material monomer solution 2 was formed by mixing together 89.03 parts by mass of methyl methacrylate, 0.53 parts by mass of methyl acrylate, 10.29 parts by mass of a chain transfer agent [n-octylmercaptan], and 0.15 parts by mass of a polymerization initiator [1,1-di(t-butylperoxy)cyclohexane].

The flow rates were adjusted such that the raw material monomer solution 2 and the syrup 1 were mixed together at the ratio of 1:23.5 in the second reaction tank 20. The residence time period of the mixture in the second reaction tank 20 was 38 minutes.

The temperature (T2) in the second reaction tank 20 was 186°C, the temperature of the jacket 23 surrounding the outer wall face of the second reaction tank 20 was 186°C, and the continuous polymerization was conducted in an adiabatic state where substantially no heat enters and exits, to produce the syrup 2. The polymerization rate of the syrup 2 was 49%.

(Comparative Example 1)

In this Comparative Example, the methacrylic resin composition and the high molecular weight methacrylic resin were each produced in the form of pellets similarly to Example 1 except the following points.

In the first reaction tank 10, 99.2769 parts by mass of methyl methacrylate, 0.5000 parts by mass of methyl acrylate, 0.1150 parts by mass of a chain transfer agent [n-octylmercaptan], 0.1000 part by mass of a mold release agent [stearyl alcohol], and 0.0081 parts by mass of a polymerization initiator [t-amylperoxy-2-ethylhexanoate] were mixed together to produce the syrup 1. The polymerization rate of the syrup 1 was 45%. The polymerization rate of the syrup 2 was 58%.

(Comparative Example 2)

In this Comparative Example, the methacrylic resin composition and the high molecular weight methacrylic resin were each produced in the form of pellets similarly to Example 1 except the following points.

In the first reaction tank 10, 99.2665 parts by mass of methyl methacrylate, 0.5000 parts by mass of methyl acrylate, 0.1250 parts by mass of a chain transfer agent [n-octylmercaptan], 0.1000 part by mass of a mold release agent [stearyl alcohol], and 0.0085 parts by mass of a polymerization initiator [t-amylperoxy-2-ethylhexanoate] were mixed together to produce the syrup 1. The polymerization rate of the syrup 1 was 46%. The polymerization rate of the syrup 2 was 59%.

(Comparative Example 3)

In this Comparative Example, the methacrylic resin composition and the high molecular weight methacrylic resin were each produced in the form of pellets similarly to Example 1 except the following points.

The raw material monomer solution 2 was prepared to be supplied to the second reaction tank 20. In this Comparative Example, the raw material monomer solution 2 was formed by mixing together 96.31 parts by mass of methyl methacrylate, 0.50 parts by mass of methyl acrylate, 3.10 parts by mass of a chain transfer agent [n-octylmercaptan], and 0.09 parts by mass of a polymerization initiator [1,1-di(t-butylperoxy)cyclohexane]. The polymerization rate of the syrup 2 was 57%.

(Comparative Example 4)

In this Comparative Example, the methacrylic resin composition and the high molecular weight methacrylic resin were each produced in the form of pellets similarly to Example 1 except the following points.

The raw material monomer solution 2 was prepared to be supplied to the second reaction tank 20. In this Comparative Example, the raw material monomer solution 2 was formed by mixing together 89.94 parts by mass of methyl methacrylate, 0.50 parts by mass of methyl acrylate, 9.47 parts by mass of a chain transfer agent [n-octylmercaptan], and 0.09 parts by mass of a polymerization initiator [1,1-di(t-butylperoxy)cyclohexane]. The polymerization rate of the syrup 2 was 56%.

(Comparative example 5)

In this Comparative Example, the methacrylic resin composition and the high molecular weight methacrylic resin were each produced in the form of pellets similarly to Example 1 except the following points.

The raw material monomer solution 2 was prepared to be supplied to the second reaction tank 20. In this Comparative Example, the raw material monomer solution 2 was formed by mixing together 89.99 parts by mass of methyl methacrylate, 0.50 parts by mass of methyl acrylate, 5.35 parts by mass of a chain transfer agent [n-octylmercaptan], and 0.04 parts by mass of a polymerization initiator [1,1-di(t-butylperoxy)cyclohexane]. The polymerization rate of the obtained syrup 2 was 52%.

(Comparative example 6)

In this Comparative Example, the methacrylic resin composition and the high molecular weight methacrylic resin were each produced in the form of pellets similarly to Example 1 except the following points.

In the first reaction tank 10, 99.2898 parts by mass of methyl methacrylate, 0.5000 parts by mass of methyl acrylate, 0.103 parts by mass of a chain transfer agent [n-octylmercaptan], 0.1000 part by mass of a mold release agent [stearyl alcohol], and 0.0072 parts by mass of a polymerization initiator [t-amylperoxy-2-ethylhexanoate] were mixed together to produce the syrup 1. The polymerization rate of the syrup 1 was 44%.

The raw material monomer solution 2 was prepared to be supplied to the second reaction tank 20. In this Comparative Example, the raw material monomer solution 2 was formed by mixing together 89.91 parts by mass of methyl methacrylate, 0.50 parts by mass of methyl acrylate, 6.42 parts by mass of a chain transfer agent [n-octylmercaptan], and 0.04 parts by mass of a polymerization initiator [1,1-di(t-butylperoxy)cyclohexane]. The polymerization rate of the obtained syrup 2 was 52%.

(Comparative Example 7)

In this Comparative Example, an apparatus was used which was modified from the apparatus of Fig. 5 used in Example 1 in that the effluent port 11b of the first reaction tank 10 was directly connected to the preheater 31. The polymerization reaction was conducted only in the first reaction tank 10 in this apparatus.

In the first reaction tank 10, 97.2311 parts by mass of methyl methacrylate, 2.5000 parts by mass of methyl acrylate, 0.16 parts by mass of a chain transfer agent [n-octylmercaptan], 0.1000 part by mass of a mold release agent [stearyl alcohol], and 0.0089 parts by mass of a polymerization initiator [1,1-di(t-butylperoxy)cyclohexane] were mixed together to produce a syrup.

The flow rate was adjusted such that the residence time period of the syrup in the first reaction tank 10 was 61.6 minutes.

The temperature (T1) in the first reaction tank 10 was 175°C, the temperature of the jacket 13 surrounding the outer wall face of the first reaction tank 10 was 175°C, and adiabatic polymerization where substantially no heat enters and exits was conducted.

The methacrylic resin composition obtained thereby was passed through the effluent line 25 and was heated to 200°C by the preheater 31. The volatile components such as unreacted raw material monomers were removed therefrom at 250°C by the devolatilization extruder 33 including a vent. The methacrylic resin composition after the devolatilization was extruded in its molten state, was cooled by water, and was thereafter cut and discharged from the discharge line 35 as pellets. The methacrylic resin was thereby produced in the form of pellets, and the obtained pellets were subjected to each of the types of evaluation.

In this Comparative Example, the polymerization rate of the syrup was 56%.

(Comparative Example 8)

In this Comparative Example, the methacrylic resin composition was obtained similarly to Comparative Example 7 except the following points.

In the first reaction tank 10, 96.9101 parts by mass of methyl methacrylate, 2.8900 parts by mass of methyl acrylate, 0.085 parts by mass of a chain transfer agent [n-octylmercaptan], 0.1000 part by mass of a mold release agent [stearyl alcohol], and 0.0149 parts by mass of a polymerization initiator [1,1-di(t-butylperoxy)cyclohexane] were mixed together to produce the syrup.

The flow rate was adjusted such that the residence time period of the syrup in the first reaction tank 10 was 43 minutes.

The methacrylic resin composition obtained thereby was passed through the effluent line 25 and was heated to 200°C by the preheater 31. The volatile components such as unreacted raw material monomers were removed therefrom at 270°C by the devolatilization extruder 33 including a vent. The methacrylic resin composition after the devolatilization was extruded in its molten state, was cooled by water, and was thereafter cut and discharged from the discharge line 35 as pellets. The methacrylic resin was thereby produced in the form of pellets, and the obtained pellets were subjected to each of the types of evaluation.

In this Comparative Example, the polymerization rate of the syrup was 56%.

As to each of Examples and Comparative Examples, the concentration of the chain transfer agent [OM] (%), the polymerization rate of the syrup (%), the weight average molecular weight of the high molecular weight methacrylic resin [Mwh], the ratio of the low molecular weight methacrylic resin [FLM] (%), the weight average molecular weight of the methacrylic resin(s) [Mw], and the weight average molecular weight of the low molecular weight methacrylic resin [Mwl] are shown in Table 1 below.

[Table 1]

| | [OM1] (%) | [OM2] (%) | Polymerization rate of Syrup 1 (%) | Polymerization rate of Syrup 2 (%) | Mwh | FLM (%) | Mw | Mwl |
|---|---|---|---|---|---|---|---|---|
| Example 1 | 0.098 | 0.5 | 44 | 56 | 207,000 | 35 | 149000 | 41000 |

(continued)

| | [OM1] (%) | [OM2] (%) | Polymerization rate of Syrup 1 (%) | Polymerization rate of Syrup 2 (%) | Mwh | FLM (%) | Mw | Mwl |
|---|---|---|---|---|---|---|---|---|
| Example 2 | 0.093 | 0.5 | - | 49 | - | - | 149000 | - |
| Example 3 | 0.098 | 0.5 | 44 | 58 | 205,000 | 37 | 148000 | 51000 |
| Example 4 | 0.098 | 0.5 | 45 | 56 | 199,000 | 32 | 150,000 | 46,000 |
| Example 5 | 0.093 | 0.42 | - | 49 | - | - | 159,000 | - |
| Comparative Example 1 | 0.115 | 0.5 | 45 | 58 | 184,000 | 35 | 132000 | 35000 |
| Comparative Example 2 | 0.125 | 0.5 | 46 | 59 | 173,000 | 35 | 129000 | 47000 |
| Comparative Example 3 | 0.098 | 0.29 | 44 | 57 | 205,000 | 35 | 155000 | 62000 |
| Comparative Example 4 | 0.098 | 0.89 | 44 | 56 | 205,000 | 35 | 151000 | 51000 |
| Comparative Example 5 | 0.098 | 0.5 | 44 | 52 | 205,000 | 30 | 162000 | 62000 |
| Comparative Example 6 | 0.103 | 0.6 | 44 | 52 | 193,000 | 30 | 149000 | 46000 |
| Comparative Example 7 | 0.16 | - | 56 | - | - | - | 110000 | - |
| Comparative Example 8 | 0.085 | - | 56 | - | - | - | 160000 | - |

[OM1]: The concentration of the chain transfer agent supplied to the first reaction tank 10

[OM2]: The concentration of the chain transfer agent supplied to the second reaction tank 20

Mwh: The weight average molecular weight of the high molecular weight methacrylic resin (the high molecular weight methacrylic resin (pellets) obtained by supplying a polymerization inhibitor solution instead of the raw material monomer solution 2 to the second reaction tank 20 and thereby suppressing the polymerization in the second reaction tank 20)

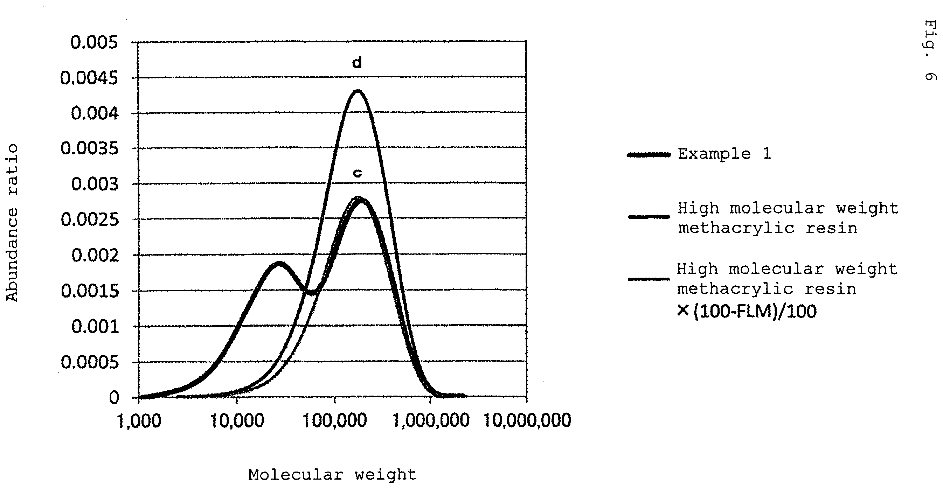

FLM: The abundance ratio (%) of the methacrylic resin whose peak molecular weight was LP (the LP resin) relative to the total of the methacrylic resin whose peak molecular weight was HP (the HP resin) and the LP resin (For FLM, GPC measurement was first conducted for each of the methacrylic resin composition and the high molecular weight methacrylic resin to be measured and information on the elution time period and the intensity thereof was obtained. The intensity of each of the resins in a minute elution time period was added together for the overall elution time period, standardization was executed by dividing the intensity of each of the resins by the value obtained by the addition, and the abundance ratio of each of the resins in the elution time period was calculated. The elution time period was converted into the information on the molecular weight and a graph was produced whose axis of abscissa represented the molecular weight and whose axis of ordinate represented the abundance ratio (see, for example, Fig. 6). When the peak value of the abundance ratio of the methacrylic resin composition on the side of the high molecular weight substance in the produced graph was denoted as "c" and the peak value of the abundance ratio of the high molecular weight methacrylic resin was denoted as "d", the value of FLM was calculated according to an equation: FLM = (d-c)/d×100.)

Mw: The weight average molecular weight of the methacrylic resin(s) contained in the methacrylic resin composition

Mwl: The weight average molecular weight of the low molecular weight methacrylic resin (Mwl is the value obtained by rounding off to the hundred the value obtained by calculation from an equation: Mw = (FLM/100)×Mwl + (100-FLM)/100×Mwh)

As to each of Examples and Comparative Examples, the values of HP, LP, and PR measured for the methacrylic resin composition (pellets) obtained therein, and the result of the evaluation according to the above evaluation methods are collectively shown in Table 2 below.

[Table 2]

| | HP | LP | PR | Rate of methylacrylate in methacrylic resin (wt%) | Rate of methyl methacrylate in methacrylic resin (wt%) | Spiral flowing length (mm) | Crazing generation time period (sec) | Tensile failure stress (MPa) | Vicat softening temperature (°C) | Stringing start temperature (°C) | 5%-weight decomposition temperature (°C) |
|---|---|---|---|---|---|---|---|---|---|---|---|
| Example 1 | 190,000 | 26,000 | 1.37 | 0.5 | 99.5 | 660 | 140 | 79 | 109 | 260 | 314 |
| Example 2 | 192,000 | 26,000 | 1.40 | 0.5 | 99.5 | 650 | 160 | 79 | 110 | 260 | 314 |
| Example 3 | 191,000 | 26,000 | 1.32 | 0.5 | 99.5 | 700 | 105 | 75 | 109 | 260 | 317 |
| Example 4 | 195,000 | 28,000 | 1.47 | 1.2 | 98.8 | 670 | 140 | 79 | 107 | 260 | 314 |
| Example 5 | 210,000 | 27,000 | 1.37 | 0.5 | 99.5 | 620 | 200 | 79 | 109 | 260 | 314 |
| Comparative Example 1 | 164,000 | 26,000 | 1.44 | 0.5 | 99.5 | 690 | 71 | 72 | 109 | 240 | 316 |
| Comparative Example 2 | 159,000 | 26,000 | 1.48 | 0.5 | 99.5 | 710 | 40 | 66 | 109 | 240 | 315 |
| Comparative Example 3 | 189,000 | 43,000 | 1.16 | 0.5 | 99.5 | 600 | unmeasured | 80 | 111 | unmeasured | 316 |
| Comparative Example 4 | 191,000 | 17,000 | 1.65 | 0.5 | 99.5 | 780 | 100 | 66 | 106 | unmeasured | 315 |
| Comparative Example 5 | 189,000 | 27,000 | 1.74 | 0.5 | 99.5 | 610 | unmeasured | 78 | 108 | unmeasured | 316 |
| Comparative Example 6 | 174,000 | 24,000 | 1.62 | 0.5 | 99.5 | 650 | 82 | 74 | 109 | unmeasured | unmeasured |
| Comparative Example 7 | - | - | - | 3.0 | 97.0 | 580 | 10 | 76 | 108 | 240 | 309 |
| Comparative Example 8 | - | - | - | 3.3 | 96.7 | 430 | 140 | 76 | 108 | 260 | unmeasu red |

In any of Examples 1 to 5, the values of HP, LP, and PR, and the ratio of methyl methacrylate in the methacrylic resin were within the ranges of the conditions (I) to (IV) defined in the present invention, that is, all of the conditions (I) to (IV) were satisfied, all physical properties of the spiral flowing length, the crazing generation time period, the tensile failure stress, the Vicat softening temperature, and the stringing start temperature were therefore good. In any of Examples 1 to 5, the 5%-weight decomposition temperature was good.

Comparative Examples 1 and 2 presented the value of HP lower than the defined range, and therefore presented short crazing generation time periods, low tensile failure stresses, and low stringing start temperatures compared to those of Examples 1 to 5.

In Comparative Example 3, the value of LP was higher than the defined range. As a result, the value of the spiral flowing length was low compared to those of Examples 1 to 5. In Comparative Example 3, the value of PR is also lower than the defined range while the value of FLM representing the rate of the low molecular weight substance was substantially equal to that of Example 1 (see Table 1). It is therefore presumed that this was resulted mainly due to the LP departing from the defined range.

In Comparative Example 4, the value of LP was lower than the defined range. As a result, the tensile failure stress and the Vicat softening temperature were low compared to those of Examples 1 to 5. In Comparative Example 4, the value of PR was higher than the defined range while the value of FLM representing the rate of the low molecular weight substance was substantially equal to that of Example 1 (see Table 1). It is therefore presumed that this was resulted mainly due to the value of LP departing from the defined range.

In Comparative Example 5, the value of PR was higher than the defined range and the value of the spiral flowing length was therefore low.

In Comparative Example 6, the value of HP was lower than the defined range and the value of PR was higher than the defined range. The effect achieved by the low value of HP and the effect achieved by the value of PR that was higher than the defined range cancelled each other, and thus the fluidity satisfied the target range. Due to the low value of HP, the crazing generation time period was however significantly reduced compared to those of Examples 1 to 5 and the value of the tensile failure stress was lower than those of the Examples 1 to 5.

As above, in Comparative Examples 1 to 6, all the conditions (I) to (IV) defined in the present invention were not satisfied, therefore, all physical properties including solvent resistance, heat resistance, mechanical strength, and stringing resistance were not able to be maintained each at a good level in addition to the good fluidity and the good thermal stability as in Examples 1 to 5 of the present invention.

In Comparative Examples 7 and 8, the physical property balance was not good. The especially important fluidity was low. It is considered that this was attributed to the inclusion of only one methacrylic resin in the methacrylic resin composition in Comparative Examples 7 and 8.

Industrial Applicability

The methacrylic resin composition of the present invention is usable as a raw material resin composition in injection molding, and is usable in production of molded articles especially for uses for vehicles (uses for vehicles such as, for example, automobiles, motorbikes, electric train cars, and train cars). For example, the methacrylic resin composition is usable as a molding material for vehicle members such as, for example, a tail lamp cover, a head lamp cover, a cover of an indicator panel, and a visor. The methacrylic resin composition is also usable as a molding material of optical members such as a lens, a display protective plate, an optical film, and a light guide plate, and members for a cosmetic container.

Reference Signs List

1 raw material monomer tank (a supply source of raw material monomer(s) and optionally a chain transfer agent)
3 polymerization initiator tank (a supply source of a polymerization initiator and optionally raw material monomer(s) and a chain transfer agent)
5 pump
7 pump
9 raw material supply line
10 first reaction tank
11a supply port
11b effluent port
11c another supply port
13 jacket (a temperature adjustment means)

14 stirrer
15 connection line
17 polymerization initiator tank (a supply source of a new raw material monomer(s), a polymerization initiator, and a chain transfer agent)
19 pump
20 second reaction tank
21a supply port
21b effluent port
21c another supply port
23 jacket (a temperature adjustment means)
24 stirrer
25 effluent line
31 preheater
33 devolatilization extruder
35 discharge line
37 collection tank
T temperature sensor (a temperature detection means)
101 flat plate
102 specimen
103 hot plate
104 heat plate
105 gauge
106 aluminum rod
107 stringing

**Claims**

1. A methacrylic resin composition that comprises two methacrylic resins differing in peak molecular weight from each other, wherein
the methacrylic resin composition satisfies the following conditions (I), (II), (III), and (IV):

(I) the methacrylic resins each have a methyl methacrylate unit and an acrylic acid ester unit as monomer units, and the weight ratio of methyl methacrylate units in the methacrylic resin composition is higher than 98.5% by weight relative to 100% by weight of all monomer units as determined by pyrolysis gas chromatography and the weight ratio of acrylic acid ester units in the methacrylic resin composition is from 0.3 to 0.7% by weight relative to 100% by weight of all monomer units as determined by pyrolysis gas chromatography;
(II) when the higher peak molecular weight of the peak molecular weights of the methacrylic resins as determined from the methacrylic resin composition by SEC chromatography according to JIS K 7252 is denoted as "HP", the value of HP satisfies the formula: $180{,}000 \leq HP \leq 220{,}000$;
(III) when the lower peak molecular weight of the peak molecular weights of the methacrylic resins as determined from the methacrylic resin composition by SEC chromatography according to JIS K 7252 is denoted as "LP", the value of LP satisfies the formula: $24{,}000 \leq LP \leq 35{,}000$; and
(IV) when the value representing the height of a peak at HP is denoted as "a" and the value representing a height of a peak at LP is denoted as "b" on a differential molecular weight distribution curve, a value of PR defined by a/b satisfies the formula: $1.32 \leq PR \leq 1.60$.

2. The methacrylic resin composition according to claim 1, wherein the methacrylic resin composition is produced by continuous bulk polymerization.

3. The methacrylic resin composition according to claim 1 or 2, wherein the methacrylic resin composition is produced by continuous bulk polymerization using two complete mixing tanks.

4. The methacrylic resin composition according to any one of claims 1 to 3, wherein the methacrylic resin composition comprises a methacrylic resin obtained by polymerization at a polymerization temperature of 110°C to 160°C at a weight ratio equal to or higher than 50% by weight relative to the total weight of the methacrylic resin composition.

5. The use of the methacrylic resin composition according to any one of claims 1 to 4, in injection molding.

**6.** The use of the methacrylic resin composition according to any one of claims 1 to 4, in a vehicle application.

**7.** A molded article obtainable from the methacrylic resin composition according to any one of claims 1 to 4 or from the use according to claim 5 or 6.

**Patentansprüche**

**1.** Eine methacrylische Harzzusammensetzung, welche zwei methacrylische Harze umfasst, die sich voneinander in ihrem Peak-Molekulargewicht unterscheiden, wobei die methacrylische Harzzusammensetzung die nachstehenden Bedingungen (I), (II), (III) und (IV) erfüllt:

(I) die methacrylischen Harze weisen jeweils eine Methylmethacrylat-Einheit und eine Acrylsäureester-Einheit als Monomereinheiten auf und der Gewichtsanteil der Methylmethacrylat-Einheiten in der methacrylischen Harzzusammensetzung ist höher als 98,5 Gew.-%, bezogen auf 100 Gew.-% aller Monomereinheiten, gemäß Bestimmung durch Pyrolysegaschromatographie, und der Gewichtsanteil der Acrylsäureester-Einheiten in der methacrylischen Harzzusammensetzung beträgt 0,3 bis 0,7 Gew.-%, bezogen auf 100 Gew.-% aller Monomereinheiten, gemäß Bestimmung durch Pyrolysegaschromatographie;
(II) wenn das höhere Peak-Molekulargewicht der Peak-Molekulargewichte der methacrylischen Harze, ermittelt aus der methacrylischen Harzzusammensetzung durch SEC-Chromatographie gemäß JIS K 7252, als "HP" bezeichnet wird, erfüllt der Wert von HP die Formel: $180.000 \leq HP \leq 220.000$;
(III) wenn das niedrigere Peak-Molekulargewicht der Peak-Molekulargewichte der methacrylischen Harze, ermittelt aus der methacrylischen Harzzusammensetzung durch SEC-Chromatographie gemäß JIS K 7252, als "LP" bezeichnet wird, erfüllt der Wert von LP die Formel: $24.000 \leq LP \leq 35.000$; und
(IV) wenn auf einer Differential-Molekulargewichtsverteilungskurve der Wert, der die Höhe eines Peaks bei HP darstellt, als "a" bezeichnet wird und der Wert, der eine Höhe eines Peaks bei LP darstellt, als "b" bezeichnet wird, erfüllt ein Wert von PR, definiert durch a/b, die Formel: $1,32 \leq PR \leq 1,60$.

**2.** Die methacrylische Harzzusammensetzung gemäß Anspruch 1, wobei die methacrylische Harzzusammensetzung durch kontinuierliche Massepolymerisation hergestellt wird.

**3.** Die methacrylische Harzzusammensetzung gemäß Anspruch 1 oder 2, wobei die methacrylische Harzzusammensetzung durch kontinuierliche Massepolymerisation unter Verwendung von zwei kompletten Mischbehältern hergestellt wird.

**4.** Die methacrylische Harzzusammensetzung gemäß einem der Ansprüche 1 bis 3, wobei die methacrylische Harzzusammensetzung ein methacrylisches Harz, das durch Polymerisation bei einer Polymerisationstemperatur von 110°C bis 160°C erhalten wurde, in einem Gewichtsanteil von gleich oder höher als 50 Gew.-%, bezogen auf das Gesamtgewicht der methacrylischen Harzzusammensetzung, umfasst.

**5.** Die Verwendung der methacrylischen Harzzusammensetzung gemäß einem der Ansprüche 1 bis 4 beim Spritzgießen.

**6.** Die Verwendung der methacrylischen Harzzusammensetzung gemäß einem der Ansprüche 1 bis 4 in einer Fahrzeuganwendung.

**7.** Ein Formgegenstand, erhältlich aus der methacrylischen Harzzusammensetzung gemäß einem der Ansprüche 1 bis 4 oder durch die Verwendung gemäß Anspruch 5 oder 6.

**Revendications**

**1.** Composition de résine méthacrylique qui comprend deux résines méthacryliques différentes en masse moléculaire de pic l'une de l'autre, dans laquelle
la composition de résine méthacrylique satisfait les conditions (I), (II), (III), et (IV) suivantes :

(I) les résines méthacryliques présentent chacune une unité méthacrylate de méthyle et une unité ester d'acide acrylique comme unités monomères, et le rapport massique d'unités méthacrylate de méthyle dans la composition de résine méthacrylique est supérieur à 98,5 % en masse par rapport à 100 % en masse de toutes les unités monomères comme déterminé par chromatographie en phase gazeuse de pyrolyse et le rapport massique d'unités ester d'acide acrylique dans la composition de résine méthacrylique est de 0,3 à 0,7 % en masse par rapport à 100 % en masse de toutes les unités monomères comme déterminé par chromatographie en phase gazeuse de pyrolyse.

(II) lorsque la masse moléculaire de pic supérieure des masses moléculaires de pics des résines méthacryliques comme déterminée à partir de la composition de résine méthacrylique par chromatographie SEC selon JIS K 7252 est désignée par "HP", la valeur de HP satisfait la formule : $180\ 000 \leq HP \leq 220\ 000$ ;

(III) lorsque la masse moléculaire de pic inférieure des masses moléculaires de pics des résines méthacryliques comme déterminée à partir de la composition de résine méthacrylique par chromatographie SEC selon JIS K 7252 est désignée par "LP", la valeur de LP satisfait la formule : $24\ 000 \leq LP \leq 35000$ ; et

(IV) lorsque la valeur représentant la hauteur d'un pic à HP est désignée par "a" et la valeur représentant une hauteur d'un pic à LP est désignée par "b" sur une courbe de distribution de masse moléculaire différentielle, une valeur de PR définie par a/b satisfait la formule : $1,32 \leq PR \leq 1,60$.

2. Composition de résine méthacrylique selon la revendication 1, dans laquelle la composition de résine méthacrylique est produite par polymérisation en masse continue.

3. Composition de résine méthacrylique selon la revendication 1 ou 2, dans laquelle la composition de résine méthacrylique est produite par polymérisation en masse continue en utilisant deux récipients de mélange complet.

4. Composition de résine méthacrylique selon l'une quelconque des revendications 1 à 3, dans laquelle la composition de résine méthacrylique comprend une résine méthacrylique obtenue par polymérisation à une température de polymérisation de 110°C à 160°C à un rapport massique supérieur ou égal à 50 % en masse par rapport à la masse totale de la composition de résine méthacrylique.

5. Utilisation de la composition de résine méthacrylique selon l'une quelconque des revendications 1 à 4, dans un moulage par injection.

6. Utilisation de la composition de résine méthacrylique selon l'une quelconque des revendications 1 à 4, dans une application de véhicule.

7. Article moulé pouvant être obtenu à partir de la composition de résine méthacrylique selon l'une quelconque des revendications 1 à 4 ou à partir de l'utilisation selon la revendication 5 ou 6.

Fig. 1

101

Fig. 2

102

102

102

EP 3 159 363 B1

Fig. 3

Fig. 4

Fig. 5

Fig. 6

Legend:
— Example 1
— High molecular weight methacrylic resin
— High molecular weight methacrylic resin × (100-FLM)/100

Axis labels: Abundance ratio (vertical), Molecular weight (horizontal)

Fig. 7

Molecular weight

## REFERENCES CITED IN THE DESCRIPTION

**Patent documents cited in the description**

- JP 2012012564 A
- JP 2006193647 A

- WO 2014088082 A